# EUROPEAN PATENT APPLICATION

(11) **EP 1 225 780 A2**
(43) Date of publication of application: **24.07.2002**
(21) Application number: 02001350.4
(22) Date of filing: 18.01.2002
(51) Int. Cl.: H04Q 7/38, H04Q 7/22, H04B 7/005

(54) **Apparatus and method for controlling reverse transmission in a mobile communication system**

(30) Priority: 18.01.2001 KR 2001002930
(71) Applicant: SAMSUNG ELECTRONICS CO., LTD., Suwon-City, Kyungki-do (KR)
(72) Inventor: Kim, Jong-Han, Yongin-shi, Kyonggi-do (KR); Bae, Sang-Min, Suwon-shi, Kyonggi-do (KR); Hong, Woo-Sang, Yongsan-gu, Seoul (KR)
(74) Representative: Grünecker, Kinkeldey, Stockmair & Schwanhäusser Anwaltssozietät

(57) **Abstract**

Disclosed is a packet data transmission method of a base station in a state where there is no data communication between the base station and a mobile station after transmission of packet data from the base station to the mobile station. The method comprises transmitting a DRQ (Data Rate Request) message to the mobile station after transmission of the packet data, to receive the transmitted packet data; transmitting to the mobile station an ACK message for a prescribed time period in response to a detection ACK signal of the DRQ message from the mobile station; and transmitting the packet data along with a power control signal at a data rate based on a data rate message received from the mobile station, after transmitting the ACK message.

## Description

### PRIORITY

This application claims priority to an application entitled "Apparatus and Method for Controlling Reverse Transmission in a Mobile Communication System" filed in the Korean Industrial Property Office on January 18, 2001 and assigned Serial No. 2001-2930, the contents of which are hereby incorporated by reference.

### BACKGROUND OF THE INVENTION

### 1. Field of the Invention

The present invention relates generally to an apparatus and method for transmitting a data rate control channel in a mobile communication system, and in particular, to an apparatus and method for intermittently transmitting (or gating) a data rate control channel.

### 2. Description of the Related Art

In general, a mobile communication system for transmitting packet data (hereinafter, referred to as a "packet transmission mobile communication system") can be classified into one system supporting only a data channel and another system supporting a voice channel as well as the data channel. An IMT-2000 (International Mobile Telecommunication 2000) 1xEv/DO (Evolution/Data Only) system is a typical packet transmission mobile communication system supporting only the data channel, while an IMT-2000 1xEV/DV (Evolution/Data and Voice) system is a typical packet transmission system supporting the voice channel as well as the data channel.

In such a packet transmission mobile communication system, a plurality of users share the same channel by time division multiplexing (TDM) in order to transmit data. In the packet transmission mobile communication system, a mobile station determines a data rate by measuring a forward channel state and transmits the determined data rate information to a base station at predefined slots, and the base station then controls a data rate based on the received data rate information and transmits data at the controlled data rate only to a mobile station with a good channel state.

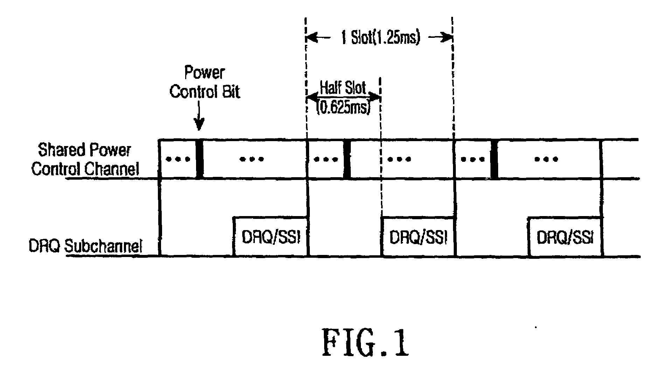

FIG. 1 illustrates a structure of forward and reverse channels related to packet communication, used when there is no packet data to be exchanged between a base station and a mobile station in a conventional packet transmission mobile communication system.

Referring to FIG. 1, if there is no packet data to be exchanged between the base station and the mobile station, the mobile station transmits a data rate request (DRQ) subchannel and a selected sector indicator (SSI) subchannel through a reverse link, and the base station transmits through a forward link a common power control channel (CPCCH) or shared power control channel (SPCCH) for controlling reverse transmission power of the mobile station.

The "DRQ" refers to a forward data rate which is determined based on the current forward channel state and can be serviced in the mobile station. The base station transmits packet data at a proper data rate based on the DRQ transmitted from the mobile station every 1.25ms-slot. The SSI is used by the mobile station to indicate a base station with the best forward channel state, and is transmitted in association with the DRQ through the reverse link. Here, the DRQ and the SSI are simultaneously transmitted through an In-phase channel (I-ch) and a Quadrature-phase channel (Q-ch). Further, the SPCCH transmitted over the forward channel is shared by all of the mobile stations connected to the base station, and power control bits (PCBs) transmitted to the respective mobile stations are inserted in the SPCCH at different time positions.

As described above, even though there is no packet data to exchange, the mobile station determines the DRQ and the SSI by measuring the forward channel state every 1.25ms-slot and transmits the determined DRQ and SSI. In this process, the mobile station controls reverse transmission power based on a power control command transmitted over a forward SPCCH. That is, even though there is no data to transmit, the mobile station must continuously perform reverse transmission.

Summarizing the problems of the prior art, if a packet data transmission channel is available, the mobile station must continuously perform reverse transmission for reporting a determined data rate, even though there is no data to exchange, thus causing an increase in power consumption of the mobile station. For example, when a user performs Internet searching or web browsing using the packet data channel, packet exchange may. occur very intermittently. Even in this state, the mobile station continuously determines a data rate and transmits the determined data rate through the reverse link, wasting its limited battery power.

### SUMMARY OF THE INVENTION

It is, therefore, an object of the present invention to provide an apparatus and method for gating on/off reverse transmission in a mobile communication system supporting a packet data service.

It is another object of the present invention to provide an apparatus and method for gating on/off a reverse channel for transmitting forward channel state information in a mobile communication system supporting a packet data service.

To achieve the above and other objects, there is provided a packet data transmission method of a base station in a state where there is no data communication between the base station and a mobile station after transmission of packet data from the base station to the mobile station. The method includes the steps of transmitting a DRQ message to the mobile station after transmission of the packet data, to receive the transmitted packet data; transmitting to the mobile station an ACK (Acknowledgement) message for a prescribed time period in response to a detection ACK signal of the DRQ message from the mobile station; and transmitting the packet data along with a power control signal at a data rate based on a data rate message received from the mobile station, after transmitting the ACK message.

Further, to achieve the above and other objects, there is provided a packet data transmission method of a mobile station in a mobile communication system supporting packet data transmission. The method includes gating on/off a reverse signal transmitted to a base station according to a prescribed rule, after completion of packet data communication; and resuming the reverse transmission, upon receipt of a DRQ message for requesting transmission of a data rate from the base station in a state where there in no data communication between the base station and the mobile station .

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a structure of forward and reverse channels related to packet communication, used when there is no packet data to be exchanged between a base station and a mobile station in a conventional packet transmission mobile communication system;
FIG. 2 illustrates a forward and reverse channel structure for intermittently controlling reverse transmission by a mobile station when there is no packet data to be exchanged between a base station and a mobile station in a mobile communication system supporting packet data transmission according to an embodiment of the present invention;
FIG. 3 illustrates a method for transmitting a signal by a mobile station so that a base station can correctly detect the signal transmitted from the mobile station over resumption of reverse transmission by the mobile station, according to an embodiment of the present invention;
FIG. 4 illustrates a method for controlling reverse transmission power without using a preamble according to another embodiment of the present invention;
FIG. 5 illustrates a method for requesting a data rate upon generation of a packet data to be transmitted from a base station to a mobile station according to an embodiment of the present invention;
FIG. 6 illustrates a structure of a forward link transmitter for transmitting a shared power control channel according to an embodiment of the present invention;
FIG. 7 illustrates a method for transmitting a DRQ report direction bit and an ACK signal for reverse transmission from the base station to the mobile station using a shared power control channel according to an embodiment of the present invention;
FIG. 8 illustrates a control device for transmitting a DRQ report direction bit and an ACK message for DRQ over a shared power control channel (SPCCH) by a base station according to an embodiment of the present invention;
FIG. 9 illustrates signals for controlling the control device of FIG. 8;
FIG. 10 illustrates a procedure for transmitting a DRQ report direction bit and an ACK bit for reverse DRQ transmission by a base station according to an embodiment of the present invention;
FIG. 11 illustrates a procedure performed by the base station, upon receipt of a packet transmission request in a power control bit transmission-off period according to an embodiment of the present invention;
FIG. 12 illustrates a modified procedure of FIG. 11 according to an embodiment of the present invention;
FIG. 13 illustrates a procedure for transmitting by the base station an ACK message for reverse transmission by the mobile station upon detecting reverse access in a power control bit transmission-off period according to an embodiment of the present invention;
FIG. 14 illustrates transmission method and timing for reverse transmission by a mobile station according to an embodiment of the present invention;
FIG. 15 illustrates a structure of an apparatus for controlling reverse transmission by a mobile station according to an embodiment of the present invention;
FIG. 16 illustrates signals for controlling the apparatus of FIG. 15;
FIG. 17 illustrates a procedure for controlling reverse transmission by a mobile station according to an embodiment of the present invention;
FIG. 18 illustrates a procedure for resuming reverse transmission by the mobile station according to an embodiment of the present invention; and
FIG. 19 illustrates a modified procedure of FIG. 18 according to an embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

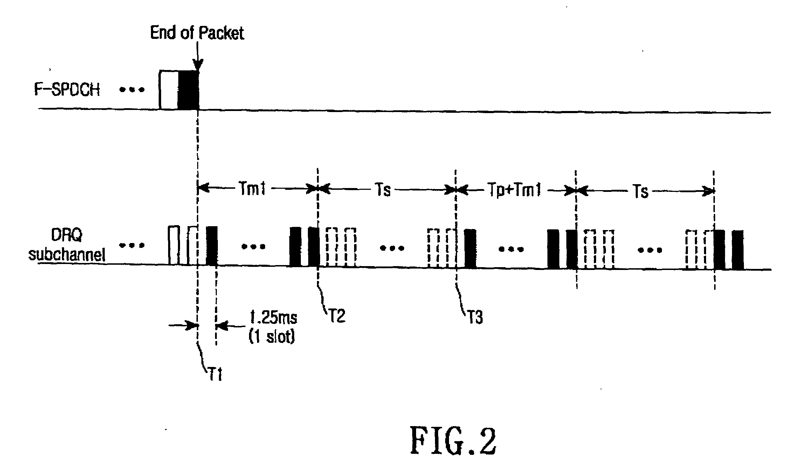

FIG. 2 illustrates a forward and reverse channel structure for gating on/off a reverse transmission when there is no packet data to be exchanged between a base station and a mobile station in a mobile communication system supporting a packet data service according to an embodiment of the present invention. In the mobile communication system, when there is no packet exchange, a DRQ subchannel and an SSI subchannel exist in a reverse channel as stated above. Herein, reference will be made to only the DRQ subchannel, for the sake of convenience.

Referring to FIG. 2, if there is no packet exchange for a prescribed time period (or a reverse transmission period) Tm1 from the end T1 of the packet exchange, the mobile station suspends reverse transmission. However, the mobile station continuously monitors the forward channel state, so as to maintain synchronization with the base station. After a lapse of a prescribed time period (or a reverse transmission-off period) Ts from a reverse transmission-off point T2, the mobile station reattempts reverse transmission by reporting a forward channel state to the base station. However, if there is no packet exchange for a prescribed time period Tp+Tm1 from a reverse transmission restarted point T3, the mobile station suspends again the reverse transmission for the time period Ts. The mobile station repeats this process. Here, the Tp represents a time required by the base station in detecting a signal from the mobile station, when the mobile station resumes the reverse transmission. In sum, when there is no packet exchange between the base station and the mobile station, the mobile station enters a gating mode to intermittently transmit the reverse signal.

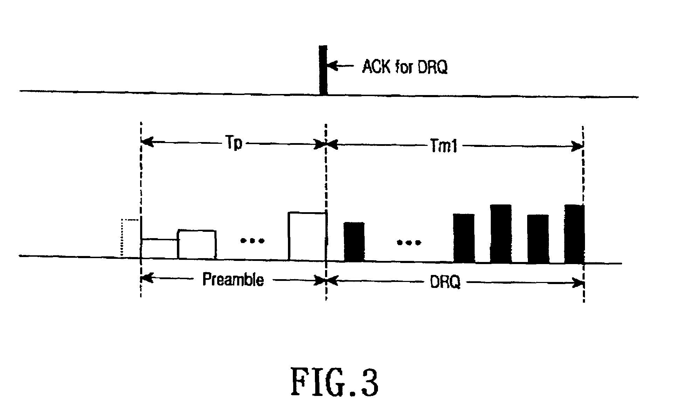

FIG. 3 illustrates a method for transmitting a signal by a mobile station so that a base station can correctly detect the signal transmitted from the mobile station over resumption of reverse transmission, according to an embodiment of the present invention. After suspension of the reverse transmission, the mobile station cannot recognize the reverse channel state. In this circumstance, if the mobile station restarts reverse transmission at the same transmission power used before the suspension of the reverse transmission, a signal of the mobile station may interfere with reverse communication of other mobile stations.

In order to solve this problem, as shown in FIG. 3, before transmission of the DRQ, the mobile station transmits a preamble by increasing its transmission power, little by little, and then transmits the DRQ by controlling the transmission power depending on a power control bit transmitted from the base station, upon receiving an ACK (Acknowledgement) signal(ACK for DRQ) indicating detection of the reverse transmission from the base station. As shown in FIG. 2, when there is no packet exchange for the time period Tm1 after receiving the ACK signal for the reverse transmission, the mobile station suspends again the reverse transmission. Here, the preamble is transmitted over a reverse pilot channel by the mobile station so that the base station can easily acquire the reverse signal.

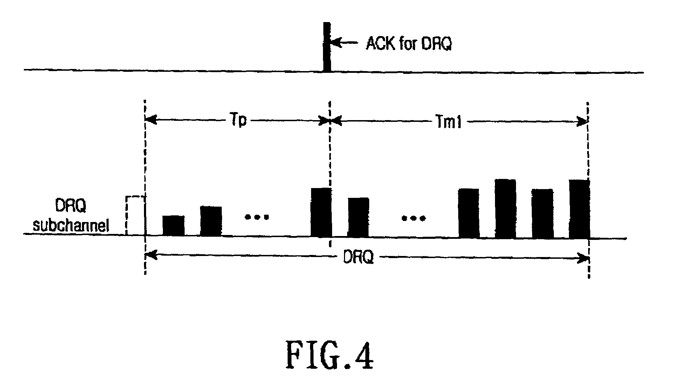

FIG. 4 illustrates a method for controlling reverse transmission power without using a preamble according to another embodiment of the present invention. This is a modified method of FIG. 3. The mobile station transmits a DRQ for a prescribed time period Tp by increasing its transmission power little by little, and then transmits the DRQ by controlling the transmission power according to a power control bit transmitted from the base station, upon receiving an ACK signal indicating detection of the reverse transmission, from the base station. Thereafter, if there is no packet exchange for the time period Tm1 after receiving the ACK signal for the reverse transmission, the mobile station suspends again the reverse transmission.

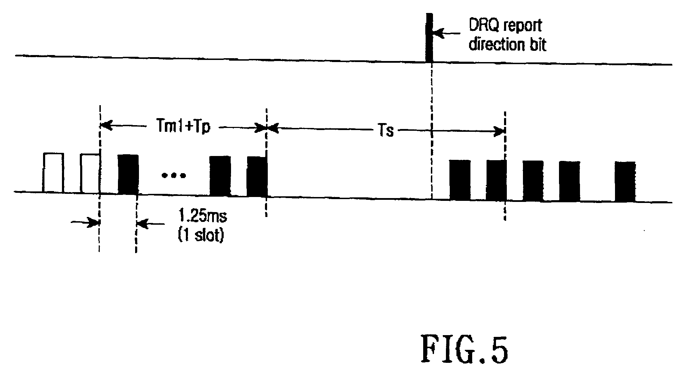

FIG. 5 illustrates a method for requesting a data rate upon generation of a packet data to be transmitted from a base station to a mobile station according to an embodiment of the present invention. Referring to FIG. 5, if packet data to be transmitted from the base station to the mobile station is generated before a lapse of the reverse transmission-off period Ts after tbe mobile station suspends the reverse transmission, the base station must be reported a forward channel state-based DRQ from the mobile station in order to determine a forward data rate. To this end, the present invention defines a DRQ report direction bit for requesting the mobile station to transmit the DRQ. As illustrated, upon receipt of the DRQ report direction bit from the base station, the mobile station immediately resumes reverse transmission to transmit the DRQ.

As stated above, the present invention defines the "DRQ report direction bit" and the "ACK signal" for the reverse transmission in order to intermittently control the reverse transmission. The base station should be able to separately transmit the DRQ report direction bit and the ACK signal for the reverse transmission to all the mobile stations. To this end, a new channel may be created. However, the present invention proposes a method for utilizing an existing channel. Specifically, the present invention proposes using a shared power control channel (SPCCH), which can be shared by the mobile stations.

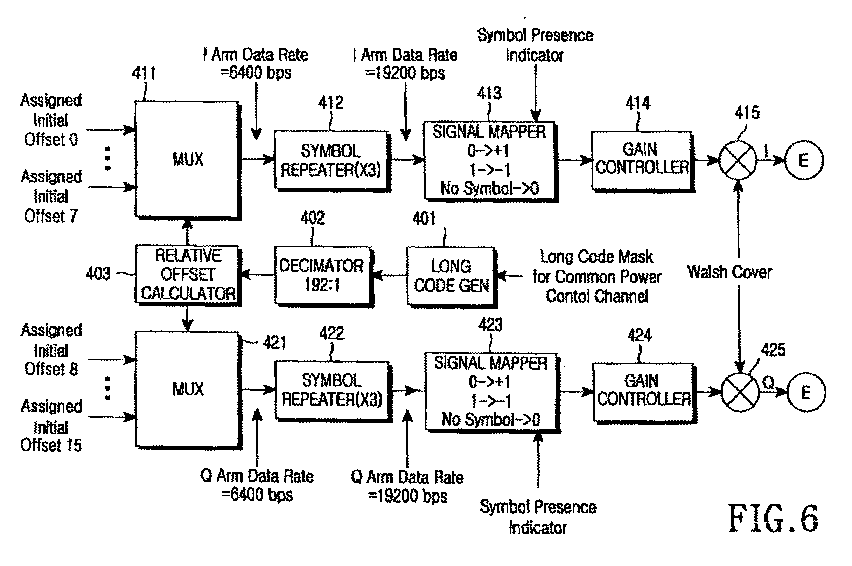

FIG. 6 illustrates a structure of a forward link transmitter for transmitting a shared power control channel (SPCCH) according to an embodiment of the present invention. The SPCCH transmitter of FIG. 6 can control transmission power of a reverse physical channel in a slot unit. The SPCCH is divided into a first channel I-ch and a second channel Q-ch, and each of the first channel I-ch and the second channel Q-ch can transmit power control commands for 8 reverse physical channels. That is, the first channcl I-ch of the SPCCH is multiplexed with power control command bits for the 8 reverse physical channels, and the second channel Q-ch is also multiplexed with power control command bits for 8 reverse physical channels. For the multiplexing, the 8 reverse physical channels are given different initial offsets. For example, the first channel I-ch is assigned initial offsets 0-7, while the second channel Q-ch is assigned initial offsets 8-15. Referring to FIG. 6, a long code generator 401 generates a clock of 1.2288 MHz as a long code by receiving a long code mask for SPCCH. A decimator 402 decimates an input symbol provided from the long code generator 401. For example, the decimator 402 may output one symbol every 192 input symbols. Here, the output signal of the decimator 402 is driven by a clock, a frequency of which is 192 times as low as a frequency of the input signal. A relative offset calculator 403 calculates a relative offset from the output symbol of the decimator 402.

A multiplexer 411 multiplexes power control command bits for 8 reverse physical channels, using initial offsets 0-7 for the 8 reverse physical channels, and the output of the relative offset calculator 403, and outputs a signal having a data rate of 6400 bps. A symbol repeater 412 receives the output symbols of the multiplexer 411 and repeats the received symbols twice (factor=X3). The output symbols of the symbol repeater 412 may have a data rate of 19200 bps. A signal mapper 413 receives the output symbols of the symbol repeater 412 and maps a symbol '0' of the received symbols to '+1' and a symbol '1' to '-1'. When there is no input symbol, the signal mapper 413 outputs '0'. The output symbols of the signal mapper 413 are gain-controlled by a gain controller 414. The output symbols of the gain controller 414 are spread by a Walsh spreader 415 with a specific 64-ary Walsh code assigned to the SPCCH. The signals output from the Walsh spreader 415 are the first channel signals I-ch of the SPCCH, which are power control command bits for the 8 reverse physical channels.

A multiplexer 421 multiplexes power control command bits for 8 reverse physical channels, using initial offsets 8-15 for the 8 reverse physical channels, and the output of the relative offset calculator 403, and outputs a signal having a data rate of 6400 bps. A symbol repeater 422 receives the output symbols of the multiplexer 421 and repeats the received symbols twice. The output symbols of the symbol repeater 422 may have a data rate of 19200 bps. A signal mapper 423 receives the output symbols of the symbol repeater 422 and maps a symbol '0' of the received symbols to '+1' and a symbol '1' to '-1'. When there is no input symbol, the signal mapper 423 outputs '0'. The output symbols of the signal mapper 423 are gain-controlled by a gain controller 424. The output symbols of the gain controller 424 are spread by a Walsh spreader 425 with a specific 64-ary Walsh code assigned to the SPCCH. The signals output from the Walsh spreader 425 are the second channel signals Q-ch of the SPCCH, which are power control command bits for the 8 reverse physical channels being different from the 8 reverse physical channels controlled through the I-ch. The SPCCH transmitter according to the present invention transmits the DRQ report direction bit and the ACK signal for the reverse transmission by controlling the power control bits provided to the multiplexers 411 and 421. For example, it is possible to realize the DRQ report direction bit by repeatedly transmitting the same power control bit to a specific mobile station. A detailed description of the method will be described herein below.

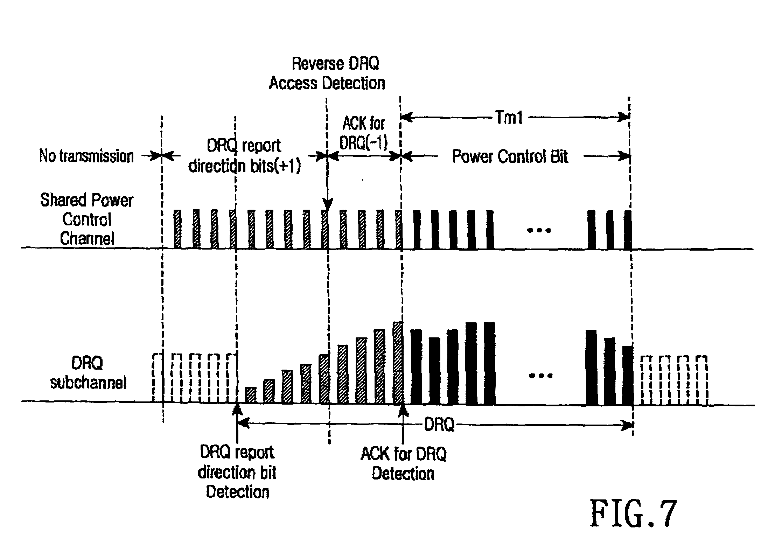

FIG. 7 illustrates a method for transmitting a DRQ report direction bit and an ACK signal for reverse transmission using a shared power control channel according to an embodiment of the present invention. As described before, if there is no packet exchange for a prescribed time period Tm1 after the end of the packet exchange, the mobile station suspends the reverse transmission, so that the base station cannot control transmission power for the mobile station. Therefore, the base station does not transmit power control bits. That is, when the mobile station suspends the reverse transmission, the base station also suspends transmission of the forward power control bits.

If the base station has packet data to transmit to the mobile station before expiration of the reverse transmission-off period after the end of the reverse transmission, the base station transmits a power control bit (+1), a power-up command, several times. Herein, for the sake of convenience, the individual power-up command will be referred to as a "DRQ report direction bit" and a group of the repeatedly transmitted power-up commands will be referred to as a "data rate request (DRQ) message". Upon detecting a power control bit while monitoring the forward shared power control channel, the mobile station counts the number of the power-up commands. If the number of the consecutively detected power-up commands is equal to a prescribed number Nm1 or the power-up commands are concentratively detected in a specific period, the mobile station transmits a reverse signal by increasing its transmission power little by little, on a judgment that the base station has transmitted the DRQ. The mobile station may either first transmit a preamble before transmitting the DRQ channel, or immediately transmits the DRQ channel by increasing its transmission power little by little.

Upon detecting the reverse signal , the base station repeatedly transmits a power control bit (-1), a power-down command, a prescribed number Nm2 of times. Herein, the individual power-down command will be referred to as an "ACK bit" and a group of the repeatedly transmitted power-down commands will be referred to as an "ACK message". If the number of consecutively generated power-down commands is equal to a prescribed number Nm2 or the power-down commands are concentratively generated in a specific period, the mobile station controls transmission power of a reverse signal according to a power control bit received from the base station, on a judgment that the base station has detected the reverse transmission by the mobile station.

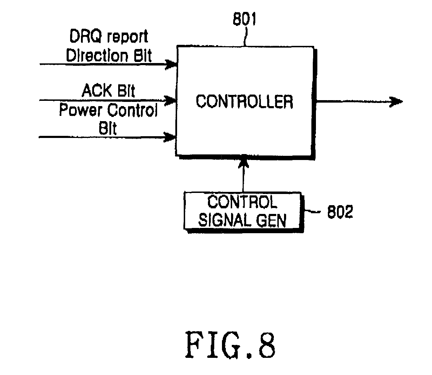

FIG. 8 illustrates a control device for transmitting a DRQ report direction bit, an ACK bit and a power control bit over a shared power control channel (SPCCH) by a base station according to an embodiment of the present invention. The control device receives a DRQ report direction bit, an ACK bit for DRQ and a power control bit, and provides its output bit to the multiplexer 411 or 421 of FIG. 6. The output bit of the control device is multiplexed with power control bits for other reverse physical channels by the multiplexer.

Referring to FIG. 8, a controller 801 receives the DRQ report direction bit, the ACK bit for the reverse DRQ and the power control bit, and selects one of the received information bits under the control of a control signal generator 802. For example, when there is packet data to be transmitted from the base station to the mobile station in a state where the mobile station suspends the reverse transmission, the controller 801 selects the DRQ report direction bit. Thereafter, if the base station is required to transmit an ACK for the reverse DRQ, the controller 801 selects the ACK bit. Further, when the packet can be normally exchanged, the controller 801 selects the power control bit.

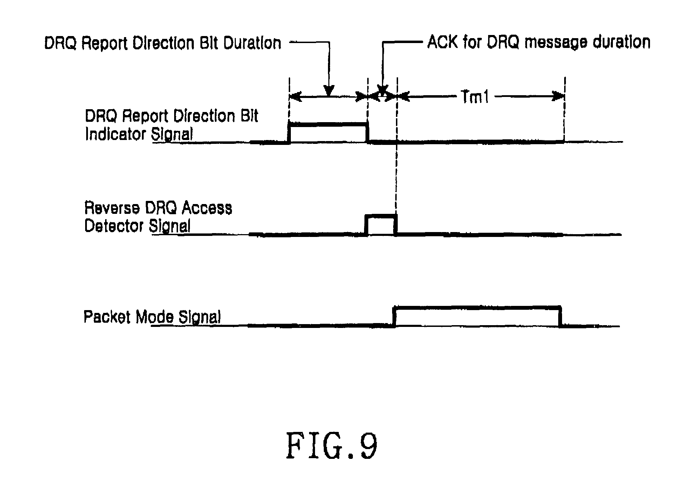

Referring to FIG. 9, the control signal generator 802 controls a selection operation of the controller 801, using a DRQ report direction bit indicator signal, a reverse DRQ access detector signal and a packet mode signal. For example, the packet mode signal maintains '1' beginning at an instant when the reverse DRQ access detector signal falls from '1' to '0'. For this period (duration), the control signal generator 802 generates a control signal so that the controller 801 outputs the power control bit. If there is no forward transmission for a time period Tm1 from the instant when the packet mode signal becomes '1', the control signal generator 802 changes the packet mode signal back to '0' so that the controller 801 suspends transmission of the power control bit.

The DRQ report direction bit indicator signal becomes '1' when there is packet data to transmit. For this period (i.e., DRQ report direction bit duration), the control signal generator 802 generates a control signal so that the controller 801 outputs the DRQ report direction bit. Further, the DRQ report direction bit indicator signal falls to '0' at an instant when the reverse DRQ access detector signal becomes '1'. In this state, the control signal generator 802 generates a control signal so that the controller 801 outputs the ACK bit. Here, the reverse DRQ access detector signal becomes '1' and then maintained for a prescribed time, when the reverse DRQ is detected. The control signal generator 802 generates a control signal so that the controller 801 outputs the ACK bit for the time period where the reverse DRQ access detector signal is maintained at '1'.

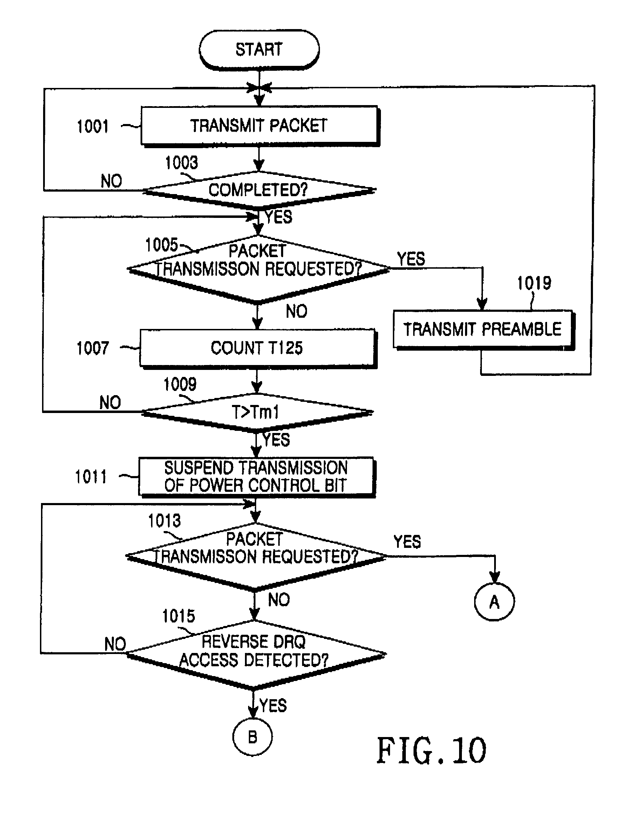

FIG. 10 illustrates a procedure for transmitting a DRQ report direction bit and an ACK bit for reverse DRQ transmission by a base station according to an embodiment of the present invention. Referring to FIG. 10, the base station exchanges packets with the mobile station in step 1001, and determines in step 1003 whether the packet exchange is completed. Afther the packet exchange was completed, the base station determines in step 1005 whether there is another packet to transmit. If there is another packet to transmit, the base station transmits a preamble in step 1019 and then returns to step 1001 to transmit the packet. However, if there is no packet to transmit, the base station counts a T125 signal, a 1.25ms-reference signal, in step 1007, and then determines in step 1009 whether the reverse transmission period Tm1 has expired. If the Tm1 has not expired, the base station returns to step 1005. Otherwise, if the Tm1 has expired, the base station suspends transmission of the power control bit transmitted to the mobile station in step 1011.

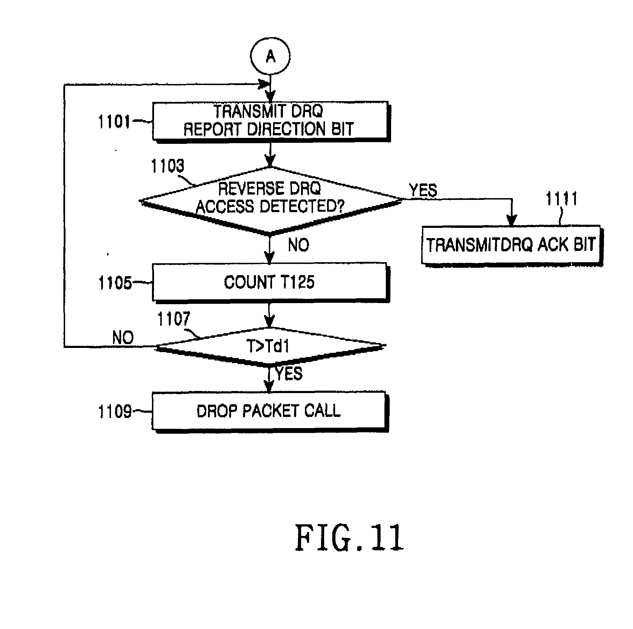

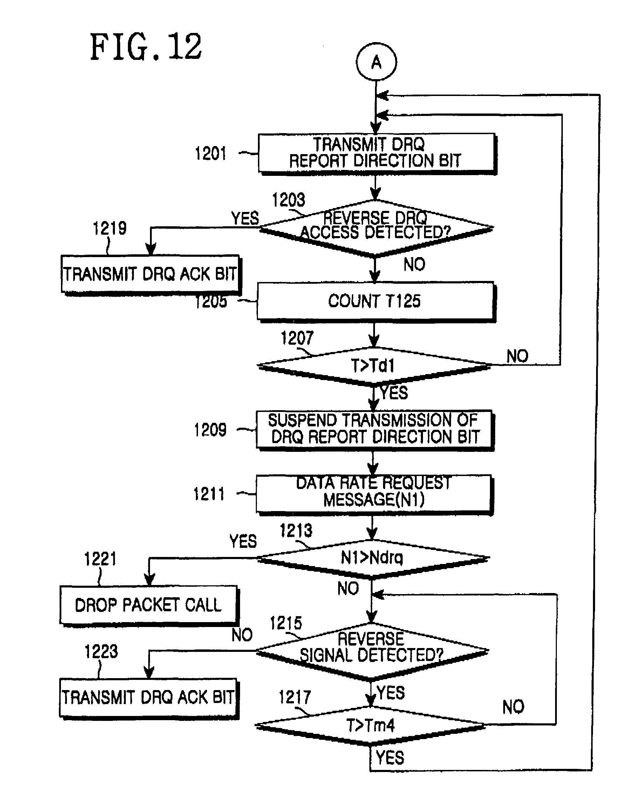

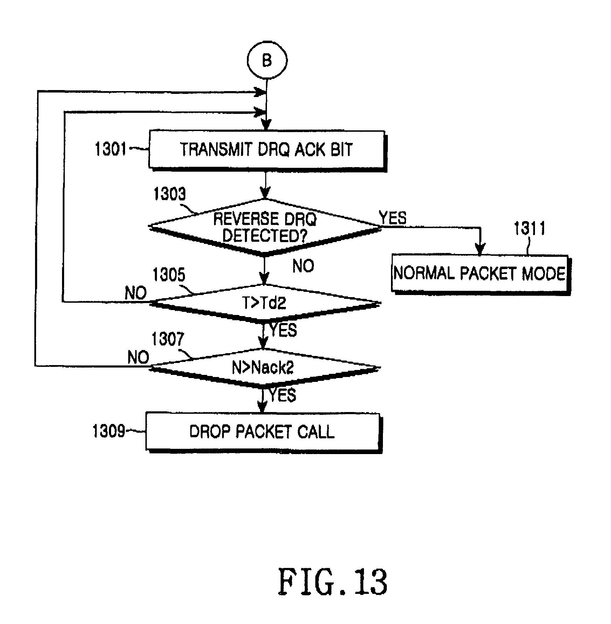

After suspending transmission of the power control bit, the base station determines again in step 1013 whether there is another packet to transmit. If there is another packet to transmit, the base station transmits a data rate request message for requesting transmission of the DRQ to the mobile station by performing a procedure of FIG. 11 and 12, which will be described later. However, if there is no packet to transmit, the base station determines in step 1015 whether the mobile station attempts reverse transmission. Upon detecting the reverse transmission (or reverse DRQ access) by the mobile station, the base station sends an ACK message for the reverse transmission by performing a procedure of FIG. 13, which will be described later. However, upon failure to detect the reverse transmission by the mobile station, the base station returns to step 1013 to determine again whether there is packet to transmit. Here, the data rate request message can be realized by continuously transmitting a power-up command from the base station to the mobile station, and the ACK message can be realized by continuously transmitting a power-down command from the base station to the mobile station.

FIG. 11 illustrates a procedure performed by the base station, where there is packet to transmit in a power control bit transmission-off period according to an embodiment of the present invention. The power control bit transmission-off period refers to a state where there is no communication between the base station and the mobile station. That is, the power control bit transmission-off period refers to a state where transmission of the power control bit transmitted from the base station to the mobile station is suspended and transmission of the DRQ channel transmitted from the mobile station to the base station is also suspended.

Referring to FIG. 11, when there is packet to transmit in the power control bit transmission-off period, the base station transmits a DRQ report direction bit for requesting transmission of the DRQ to the mobile station in step 1101. Thereafter, the base station determines in step 1103 whether a reverse signal from the mobile station is detected. Upon detecting the reverse signal (or reverse DRQ access signal), the base station repeatedly transmits an ACK bit to the mobile station a prescribed number of times, in step 1111. However, upon failure to receive the reverse signal, the base station counts a T125 signal in step 1105, and determines in step 1107 whether a prescribed time period Td1 has expired. Here, the Td1 refers to a time period where the base station transmits the DRQ report direction bit. If the time period Td1 has not expired, the base station returns to step 1101 to transmit the DRQ report direction bit. However, upon failure to detect the reverse signal until the time period Td1 has expired, the base station drops a packet call in step 1109, on a judgment that the mobile station cannot receive the forward packet data.

FIG. 12 illustrates a modified procedure of FIG. 11 according to an embodiment of the present invention. Upon detecting reverse transmission from the mobile station while transmitting DRQ report direction bits responsive to the data rate request message, the base station transmits an ACK bit. However, upon failure to detect the reverse transmission from the mobile station, the base station counts the number of failures to detect the ACK bit responsive to the data rate request message instead of dropping the packet call. The base station drops the packet call only when the counted number exceeds a specific number Ndrq.

Referring to FIG. 12, where there is packet to transmit in the power control bit transmission-off period, the base station transmits a DRQ report direction bit responsive to the data rate request message in step 1201, and then determines in step 1203 whether there is reverse signal from the mobile station. Upon detecting the reverse signal (or reverse DRQ access), the base station transmits an ACK bit to the mobile station in step 1219. However, upon failure to detect the reverse signal, the base station counts a T125 signal in step 1205, and then determines in step 1207 whether the time period Td1 has expired. If the time period Td1 has not expired, the base station returns to step 1201 to transmit again the DRQ report direction bit.

However, upon failure to detect the reverse signal until the time period Td1 expires after transmitting the DRQ report direction bit, the base station suspends transmission of the DRQ report direction bit in step 1209, and then counts the number N1 of transmitting the data rate request message in step 1211. The data rate request message, as stated above, refers to a group of the continuously transmitted DRQ report direction bits. Thereafter, the base station determines in step 1213 whether the number N1 of transmitting the data rate request message is larger than a prescribed number Ndrq. If the transmission number N1 of the data rate request message is larger than the preset number Ndrq, the base station drops the packet call to be transmitted to the mobile station in step 1221. Otherwise, the base station performs steps 1215 and 1217, to determine whether reverse signal is detected while waiting for a prescribed time Tm4. Upon failure to detect the reverse transmission for the prescribed time period Tm4, the base station returns to step 1201 to transmit again the DRQ report direction bit. However, upon detecting the reverse signal within the prescribed time period Tm4, the base station transmits an ACK bit in step 1223.

FIG. 13 illustrates a procedure for transmitting by the base station an ACK message for reverse signal by the mobile station upon detecting reverse access in a power control bit transmission-off period according to an embodiment of the present invention. The base station can either operate in a normal mode immediately after transmitting the ACK message to the mobile station, or operate in the normal mode upon correctly detecting the DRQ after transmitting the ACK message responsive to the reverse preamble as shown in FIG. 3. In the latter case, the mobile station first transmits only the preamble in the reverse access process, and then transmits the DRQ in the transmission process only upon correctly receiving the ACK message from the base station.

Referring to FIG. 13, upon detectig a reverse signal, the base station transmits an ACK bit in step 1301, and then determines in step 1303 whether reverse DRQ from the mobile station is detected. Upon detecting the reverse DRQ, the base station operates in the normal packet mode in step 1311. However, upon failure to detect the reverse DRQ, the base station determines in step 1305 whether a prescribed time period Td2 has expired from a transmission start point of the ACK bit. Here, the time period Td2 refers to a period where the base station transmits the ACK bit. If the prescribed time period Td2 has not expired, the base station returns to step 1301 to transmit again the ACK bit responsive to the detected reverse signal. However, upon failure to detect the DRQ until the time period Td2 expires, the base station counts the number of transmitted ACK bits in step 1307. If the counted number is larger than a prescribed number Nack2, the mobile station has not responded to the signal from the base station,, the base station drops the packet call in step 1309. However, if the counted number is not larger than the prescribed number Nack2, the base station waits again for a reverse signal to be received from the mobile station. Thereafter, the base station returns to step 1301, and repeats the succeeding steps.

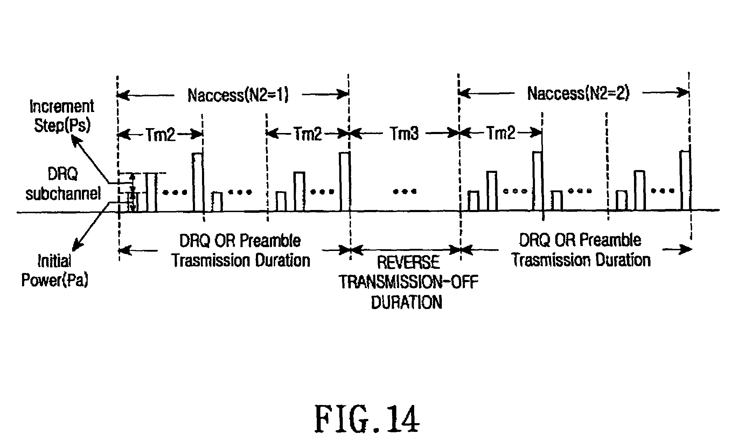

FIG. 14 illustrates transmission method and timing for reverse transmission by a mobile station according to an embodiment of the present invention. Referring to FIG. 14, when there is packet data to transmit, the mobile station increases its transmission power little by little from an initial transmission power Pa by an increment step Ps for a time period Tm2, and after a lapse of the time period Tm2, the mobile station attempts again to increase the transmission power little by little from the initial transmission power Pa by the increment step Ps. Upon failure to detect an ACK responsive to the reverse transmission, or upon failure to receive an ACK transmitted from the base station until the time period Tm2 is repeated a prescribed number of times, the mobile station suspends the reverse transmission for a prescribed time period Tm3, and then drops a packet call or attempts again the reverse transmission after a lapse of a prescribed time.

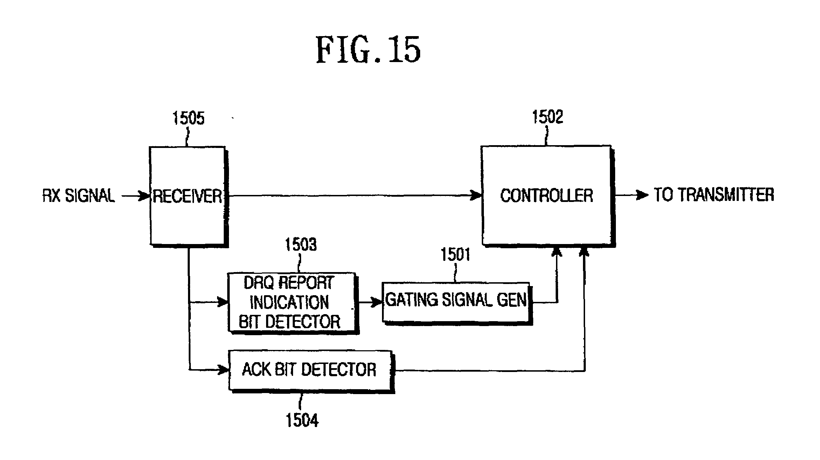

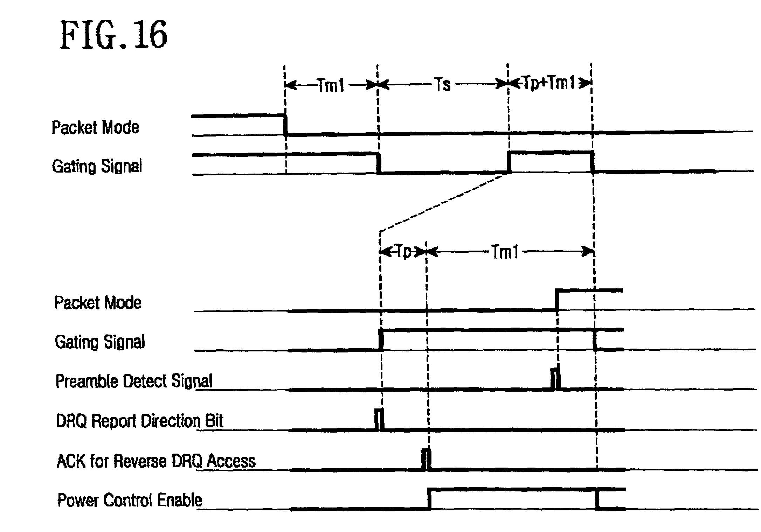

FIG. 15 illustrates a structure of an apparatus for controlling reverse transmission by a mobile station according to an embodiment of the present invention. FIG. 16 illustrates signals for controlling the apparatus of FIG. 15. An operation of the apparatus shown in FIG. 15 will be described with reference to FIG. 16.

Referring to FIGs. 15 and 16, a gating signal generator 1501 generates a gating signal for gating on/off-the reverse transmission. When the gating signal is '1', a controller 1502 turns ON a reverse power amplifier (not shown). In contrast, if the gating signal is '0', the controller 1502 turns OFF the reverse power amplifier so as to gate the reverse transmission. The controller 1502 may gate the reverse transmission by setting a gain of the reverse power amplifier to '0'. In an alternative embodiment, it is also possible to gate the transmission signal using a switching element. Herein, the reverse power amplifier and the switching element constitute a gating device for gating on/off a reverse signal, and the gating device is included in the transmitter for transmitting the reverse signal.

A packet mode signal and a DRQ report direction bit shown in FIG. 16 are signals used to control the gating signal generator 1501. The packet mode signal maintains '1' during packet exchange and falls to '0' after the end of the packet exchange. If the packet mode signal of '0' is maintained for a prescribed time period Tm1, the gating signal generator 1501 changes its gating signal from '1' to '0' so as to turn OFF the reverse power amplifier. If a time period Ts has lapsed after the gating signal output from the gating signal generator 1501 falls down to '0', or if a DRQ report direction bit is detected by a DRQ report direction bit detector 1503, the gating signal becomes '1' to perform the reverse transmission.

A detailed description will be made as to how the mobile station starts the reverse transmission based on the DRQ report direction bit. The DRQ report direction bit detector 1503 generates a pulse signal if the number of the generated power-up commands is equal to a number Nm1 while monitoring the power control bits through a receiver 1505, on a judgment that the base station has requested transmission of the DRQ. The gating signal generator 1501 then generates a gating signal of '1'. The controller 1502 then controls the reverse power controller to control the reverse signal as in the method of FIG. 3 (in which the preamble is used) or FIG. 4 (in which the preamble is not used). Upon receiving an ACK bit if the number of the generated power-down commands is equal to a predetermined number for the reverse transmission, an ACK bit detector 1504 provides a pulse signal to the controller 1502. The controller 1502 then controls the power amplifier so as to control the reverse transmission power based on the power control bit received from the base station.

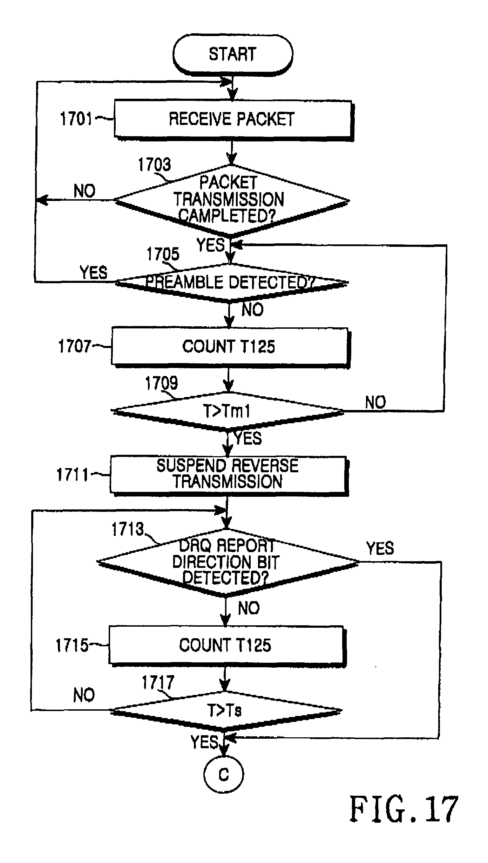

FIG. 17 illustrates a procedure for controlling reverse transmission by a mobile station according to an embodiment of the present invention. Referring to FIG. 17, the mobile station receives a packet from the base station in step 1701, and then determines in step 1703 whether reception of the packet is completed. If reception of the packet is completed, the mobile station determines in step 1705 whether a preamble is received from the base station in order to determine whether another packet is received. Upon detecting the preamble, the mobile station returns to step 1701 to repeat an operation of receiving a packet from the base station. However, upon failure to receive a preamble, the mobile station counts a T125 signal in step 1707 while performing the reverse transmission, and then determines in step 1709 whether a reverse transmission period Tm1 has expired. If the time period Tm1 has not expired, the mobile station returns to step 1705 to determine again whether a preamble is received.

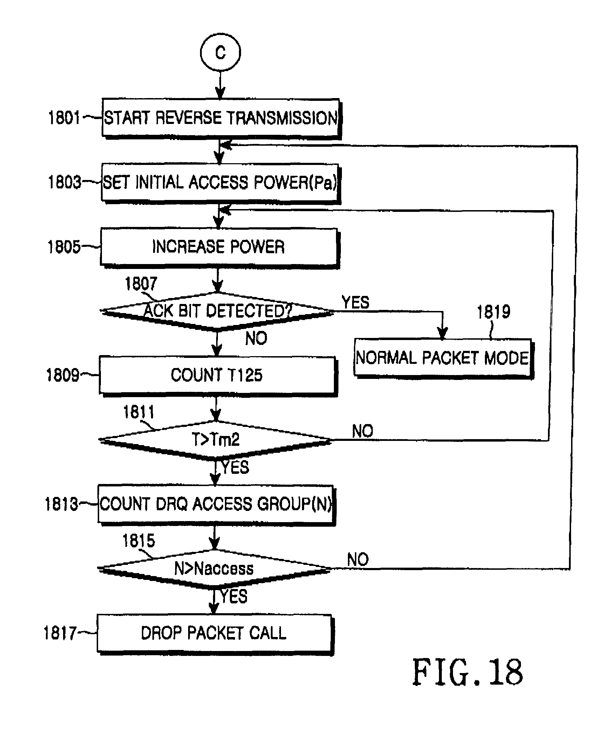

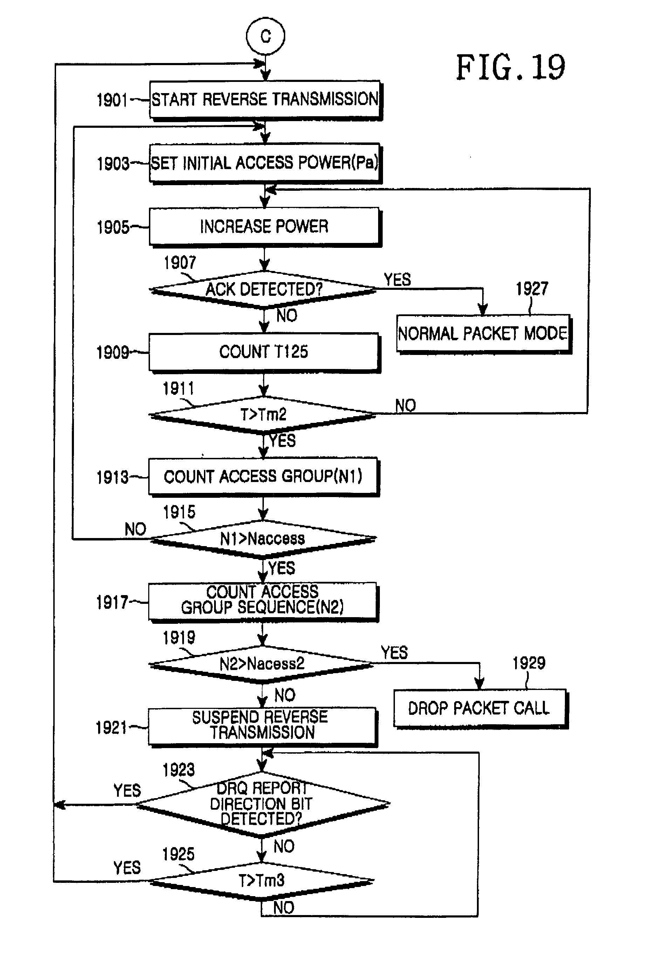

However, if the time period Tm1 has expired, the mobile station suspends the reverse transmission in step 1711, and then determines in step 1713 whether a DRQ report direction bit for requesting transmission of DRQ is received from the base station. Upon detecting a DRQ report direction bit, the mobile station transmits DRQ through the reverse link by performing a procedure of FIG. 18 and 19. However, upon failure to receive the DRQ report direction bit, the mobile station counts a T125 signal in step 1715, and then determines in step 1717 whether a prescribed time period Ts has expired. If the time period Ts has not expired, the mobile station returns to step 1713 to determine again whether the DRQ report direction bit is received. However, if the time period Ts has expired, the mobile station transmits the DRQ through the reverse link by performing the procedure of FIG. 18 and 19.

FIG. 18 illustrates a procedure for resuming reverse transmission by the mobile station according to an embodiment of the present invention. The reverse transmission can be resumed either in a prescribed time period or at the request of the base station.

Referring to FIG. 18, the mobile station enters a reverse transmission mode in step 1801, and then sets its initial transmission power to prescribed transmission power Pa by open loop power estimation in step 1803 in order to perform reverse transmission. Thereafter, the mobile station transmits a preamble or DRQ in a slot unit by increasing its transmission power by a prescribed power step Ps in step 1805. While transmitting the preamble or DRQ, the mobile station determines in step 1807 whether an ACK bit for the reverse transmission is received. Upon detecting the ACK bit, the mobile station enters a normal packet mode in step 1819 where it controls its transmission power in response to a power control command from the base station.

However, upon failure to detect the ACK bit for the reverse transmission, the mobile station counts a T125 signal in step 1809, and then determines in step 1811 whether a prescribed time period Tm2 has expired. Here, the time period Tm2 is a time period prescribed for the reverse transmission, and the mobile station transmits the DRQ by increasing the initial power Pa by the power step Ps for the time period Tm2. If the time period Tm2 has not expired, the mobile station returns to step 1805 to transmit again the preamble or DRQ by increasing its transmission power.

If, however, the time period Tm2 has expired, the mobile station counts the number N of access attempts, and then determines in step 1815 whether the number N of access attempts is larger than a prescribed number Naccess. Here, one access attempt refers to transmission for the time period Tm2. That is, the mobile station determines the number of transmissions performed for the time period Tm2. If the number N of the access attempts is not larger than the prescribed number Naccess, the mobile station returns to step 1803 to perform again the reverse transmission by increasing the transmission power from the initial power Pa by the power step Ps. Upon failure to detect an ACK bit for the reverse transmission until the number N of the access attempts is larger than the prescribed number Naccess, the mobile station drops the packet call with the base station in step 1817.

FIG. 19 illustrates a modified procedure of FIG. 18 according to an embodiment of the present invention. In this procedure, upon failure to receive an ACK bit, the mobile station repeatedly attempts reverse transmission after a lapse of a prescribed time period Tm3 instead of immediately dropping the packet call. Thereafter, the base station drops the packet call, if the reverse transmission attempts are repeated prescribed times Naccess2.

Referring to FIG. 19, steps 1901 to 1915 and 1927 are equal to steps 1801 to 1815 and 1819 of FIG. 18, so a description of the steps will not be made for simplicity. The mobile station determines in step 1915 whether the number N1 of access attempts is larger than the prescribed number Naccess. If the number N1 of access attempts is larger than the prescribed number Naccess, the mobile station counts a DRQ or preamble in transmission period N2 shown in FIG. 14 in step 1917, and then determines in step 1919 whether the counted DRQ or preamble transmission in transmission period N2 is larger than a prescribed number Naccess2. If the counted DRQ or preamble transmission in transmission period N2 is larger than the prescribed number Naccess2, the mobile station drops the packet call with the base station in step 1929. Otherwise, the mobile station suspends the reverse transmission in step 1921. Thereafter, the mobile station determines in step 1923 whether a DRQ report direction bit for requesting transmission of the DRQ is detected from the base station. Upon detecting the DRQ report direction bit, the mobile station returns to step 1901 to immediately start the reverse transmission. Otherwise, the mobile station determines in step 1925 whether a transmission-off period has exceeded a prescribed time period Tm3. If the transmission-off period has exceeded the prescribed time period Tm3, the mobile station returns to step 1901 to start the reverse transmission. Otherwise, the mobile station returns to step 1923 to determine again whether the DRQ report direction bit is detected from the base station.

As described above, even though a packet channel is available, the mobile station suspends reverse transmission for a period where there is no packet to transmit, and thereafter, the mobile station resumes the reverse transmission only when necessary, thus reducing its power consumption. The present invention is very efficient when it is used for an application in which packet data is transmitted on a burst basis, especially in a state when the packet channel is available for Internet searching or web browsing. In addition, the mobile station minimizes interference between mobile stations by intermittently performing reverse transmission, thus making it is possible to increase a capacity of the reverse link.

While the invention has been shown and described with reference to certain preferred embodiments thereof, it will be understood by those skilled in the art that various changes in form and details may be made therein without departing from the spirit and scope of the invention as defined by the appended claims.

## Claims

1. A base station apparatus in a mobile communication system supporting packet data transmission, comprising:
a controller for generating a data rate request (DRQ) message for requesting transmission of a data rate, when there is a packet to transmit in a state where there is no data communication between the base station and a mobile station; and
a channel transmitter for transmitting the data rate request message generated from the controller to the mobile station.

2. The base station apparatus as claimed in claim 1, wherein the data rate request message is comprised of a prescribed number of identical power control bits.

3. The base station apparatus as claimed in claim 1, wherein the channel transmitter includes a shared power control channel (SPCCH) transmitter for transmitting a power control bit for controlling transmission power of the mobile station.

4. The base station apparatus as claimed in claim 1, wherein the controller provides the channel transmitter with an ACK (Acknowledgment) message in response to a detection ACK signal of the data rate request message from the mobile station.

5. The base station apparatus as claimed in claim 4, wherein the ACK message is comprised of a prescribed number of identical power control bits.

6. The base station apparatus as claimed in claim 4, wherein the controller provides the channel transmitter with a power control bit for controlling transmission power of the mobile station, after transmitting the ACK message.

7. A mobile station apparatus in a mobile communication system supporting packet data transmission, comprising;
a gating signal generator for generating a gating signal for gating on/off a reverse signal transmitted to a base station after completion of packet data communication , and generating a gating signal for immediately resuming transmission of the reverse signal upon receipt of a data rate request message for requesting transmission of a data rate from the base station when there is no data communication between the base station and the mobile station;
a controller for gating on/off the reverse signal according to the gating signal from the gating signal generator; and
a transmitter for gating transmission of the reverse signal transmitted to the base station according to the control signal from the controller.

8. The mobile station apparatus as claimed in claim 7, wherein the controller provides the trasmitter with a power control signal for the reverse signal so as to increase transmission power of the reverse signal little by little from predetermined initial access power, upon resumption of the reverse signal.

9. The mobile station apparatus as claimed in claim 7, wherein the controller provides the transmitter with a power control signal for the reverse signal so as to control transmission power of the reverse signal according to a power control bit received from the base station, after receipt of an ACK message responsive to transmission of the reverse signal.

10. The mobile station apparatus as claimed in claim 7, wherein the data rate request message is comprised of a prescribed number of identical power control bits.

11. The mobile station apparatus as claimed in claim 9, wherein the ACK message is comprised of a prescribed number of identical power control bits.

12. The mobile station apparatus as claimed in claim 11, wherein the data rate request message and the ACK message are received over a forward shared power control channel (SPCCH).

13. A packet data transmission method of a base station in a state where there is no data communication between the base station and a mobile station , comprising the steps of:
transmitting a data rate request message to the mobile station to transmit the packet data;
transmitting an ACK message to the mobile station for a prescribed time period in response to a detection ACK signal of the data rate request message from the mobile station; and
transmitting the packet data along with a power control signal after transmitting the ACK message.

14. The packet data transmission method as claimed in claim 13, further comprising the step of dropping the packet data to be transmitted, upon failure to receive a detection ACK signal of the data rate request message from the mobile station.

15. The packet data transmission method as claimed in claim 13, further comprising the steps of:
retransmitting the data rate request message after suspending transmission of the data rate request message for a prescribed time, upon failure to receive a detection ACK signal of the data rate request message from the mobile station; and
dropping the packet data to be transmitted, upon failure to receive the detection ACK signal until a number of transmitting the data rate request message reaches a prescribed number.

16. The packet data transmission method as claimed in claim 13, wherein the data rate request message is comprised of a prescribed number of identical power control bits.

17. The packet data transmission method as claimed in claim 13, wherein the ACK message is comprised of a prescribed number of identical power control bits.

18. A packet data transmission method of a mobile station in a mobile communication system supporting packet data transmission, comprising the steps of:
gating on/off a reverse signal transmitted to a base station, after completion of packet data communication; and
resuming the reverse transmission, upon receipt of a data rate request message for requesting transmission of a data rate from the base station when. there is no data communication between the base station and the mobile station .

19. The packet data transmission method as claimed in claim 18, wherein upon resumption of the reverse transmission, transmission power of the reverse signal is increased little by little from predetermined initial access power for a prescribed time.

20. The packet data transmission method as claimed in claim 18, further comprising the step of controlling transmission power of the reverse signal according to a power control bit received from the base station, upon receipt of an ACK message responding to the reverse transmission from the base station.

21. The packet data transmission method as claimed in claim 18, further comprising the steps of:
retransmitting the reverse signal performed for the prescribed time, upon failure to receive an ACK message responding to transmission of the reverse signal, from the base station; and
dropping packet communication upon failure to receive the ACK message until a number of transmitting the reverse signal reaches a prescribed number.

22. The packet data transmission method as claimed in claim 18, further comprising the steps of:
retransmitting the reverse signal performed for the prescribed time, upon failure to receive an ACK message responding to transmission of the reverse signal, from the base station;
suspending the transmission of the reverse signal for a prescribed time, resuming the reverse transmission and then determining whether the ACK message is received, if the number of transmitting the reverse signal reaches a prescribed number; and
dropping packet communication upon failure to receive the ACK message until a number of the suspensions reaches the prescribed number.

23. The packet data transmission method as claimed in claim 18, wherein the data rate request message is comprised of a prescribed number of identical power control bits.

24. The packet data transmission method as claimed in claim 20,
wherein the ACK message is comprised of a prescribed number of identical power control bits.
